# EUROPÄISCHE PATENTANMELDUNG

(11) **EP 1 355 104 A1**
(43) Veröffentlichungstag der Anmeldung: **22.10.2003**
(21) Anmeldenummer: 03008398.4
(22) Anmeldetag: 11.04.2003
(51) Int. Cl.: F16N 13/18, B25D 17/26

(54) **Selbsttätige Schmiereinrichtung**

(30) Priorität: 18.04.2002 DE 20206050 U
(71) Anmelder: Lincoln GmbH & Co. KG, 69190 Walldorf (DE)
(72) Erfinder: Fleige, Axel, 76698 Ubstadt Weiher (DE)
(74) Vertreter: KEIL & SCHAAFHAUSEN

(57) **Zusammenfassung**

Die Erfindung bezieht sich auf eine selbsttätige Schmiereinrichtung an einem z.B. mittels eines hydraulischen Druckmediums antreibbaren Schlagwerkzeug (1) oder dergleichen, mit einer ein Pumpenelement (2) aufweisenden Schmierstoffpumpe zur Förderung eines Schmierstoffes, z.B. Schmierfettes, zu mindestens einer mit Schmierstoff zu beaufschlagenden Stelle des Schlagwerkzeugs (1), wobei der Schmierstoff entweder aufgrund seines eigenen Fließverhaltens und/oder mittels aufgebrachtem Druck dem Förderraum des Pumpenelements (2) und von dem Pumpenelement (2) zu der Schmierstelle zuführbar ist, sowie mit Mitteln zum Erzeugen eines Pumpenhubes des Pumpenelements (2) beim Betreiben des Schlagwerkzeugs (1), und ist dadurch gekennzeichnet, dass der Förderkolben (7) des Pumpenelements (2) mit einem mit dem Schlagwerk (15) bewegten, vorzugsweise mit diesem verbundenen Betätigungsarm (4) zusammenwirkt.

## Beschreibung

Die Erfindung bezieht sich auf eine selbsttätige Schmiereinrichtung an einem z.B. mittels eines hydraulischen Druckmediums antreibbaren Schlagwerkzeug oder dergleichen, unter Vibration arbeitenden Werkzeugen, mit einer ein Pumpenelement aufweisenden Schmierstoffpumpe zur Förderung eines Schmierstoffes, z.B. Schmierfettes, zu mindestens einer mit Schmierstoff zu beaufschlagenden Stelle des Schlagwerkzeugs, wobei der Schmierstoff entweder aufgrund seines eigenen Fließverhaltens und/oder mittels aufgebrachtem Druck dem Förderraum des Pumpenelements und von dem Pumpenelement der Schmierstelle zuführbar ist, sowie mit Mitteln zum Erzeugen eines Pumpenhubes des Pumpenelements beim Betreiben des Schlagwerkzeugs. Als ein solches Werkzeug kommen z.B. hydraulische Schlagwerkzeuge oder Zangen infrage.

Aus der EP-A-0 430 024 ist eine automatische Schmiereinrichtung für den Meißel eines hydraulischen Schlagwerks mit einer an einem Schmiermittelvorratsbehälter angeschlossenen Fördereinheit bekannt, mittels welcher die den Meißel abstützende Meißelführung mit Schmierfett beaufschlagbar ist. Der mit Schmierfett gefüllte Schmiermittelvorratsbehälter weist ein bewegliches Trennelement und eine über dieses auf das Schmierfett einwirkende vorgespannte Druckfeder auf, über welche das Schmierfett der Fördereinheit zuführbar ist. Der Förderdruck der Fördereinheit wird hierbei von dem das Schlagwerk antreibenden Betriebsdruck hervorgerufen und die Fördereinheit führt jeweils bei Beaufschlagung des Schlagwerks mit dem Betriebsdruck einen vorgegebenen Förderhub mit einstellbarer Größe aus. Nachteilig hierbei ist, dass die Schmiermittelpumpe als Einhubzylinderpumpe ausgebildet ist, deren eine Seite von dem Hydrauliköl der Meißelbetätigung und deren andere Seite von einer Feder beaufschlagt ist. Dabei wird nur einmal, und zwar vor dem eigentlichen Betrieb des Schlagwerkzeugs Schmierfett abgegeben. Beim Betrieb eines hydraulischen Meißelschlagwerks liegt der Hydraulik-Öldruck bei etwa 150 bar. Bei Beendigung des Betriebes fällt der Druck nur langsam so weit ab, z.B. auf unter 10 bar, dass die Feder den Druckkolben nur mit entsprechender Verzögerung in seine Ausgangslage zurückschieben kann. Die Pausenzeiten, bis das Schlagwerk wieder in Funktion treten kann, sind daher zu lange. Bei manchen Schlagwerken fällt der Druck in der Hauptleitung überhaupt nicht auf einen Wert ab, bei welchem die Feder den Druckkolben in seine Ausgangslage zurückschieben kann. In diesen Fällen ist der Einsatz eines zusätzlichen Überdruckventils erforderlich, was zusätzliche Kosten verursacht.

Mit der EP-A-1 112 820 ist zur Vermeidung dieses Problems ein Schmiersystem für ein vibratorisches Vorrichtung, bspw. eine hydraulische Schlagvorrichtung, vorgeschlagen worden, bei welchem eine Schmiermittelpumpe zum Fördern von Schmiermittel zu einem oder mehreren Punkten der Vorrichtung einen Pumpenantrieb aufweist, welcher auf die Vibration der Vorrichtung zurückzuführen ist. Zu diesem Zweck wird die Vibration auf ein Gewicht übertragen, welches aufgrund seiner dadurch erfolgenden Oszillation den Förderkolben der Schmierstoffpumpe antreibt. Der Antrieb weist zu diesem Zweck einen Freilauf (eine Einwegkupplung) und einen auf dem gleichen Wellenkörper angeordneten Exzenter auf, welcher mit seiner Exzenterfläche mit dem Förderkolben des Pumpenelements zusammenwirkt. Diese Lösung ist aufgrund des mechanischen Aufwandes verbesserungsfähig.

Zu diesem Zweck ist in der DE-U-201 18 920 eine selbsttätige Schmiereinrichtung an einem mittels eines Hydraulik-Druckmediums antreibbaren Werkzeug oder dergleichen vorgeschlagen worden, mit einer ein Pumpenelement aufweisenden Schmierstoffpumpe zur Förderung eines Schmierstoffes aus einem Vorratsbehälter zu mindestens einer mit Schmierstoff zu beaufschlagenden Stelle des Werkzeugs, wobei der Schmierstoff entweder aufgrund seines eigenen Fließverhaltens und/oder mittels aufgebrachtem Druck dem Förderraum des Pumpenelements und von dem Pumpenelement der Schmierstelle zuführbar ist, sowie mit Mitteln zum Erzeugen eines Pumpenhubes des Pumpenelements beim Betreiben des Werkzeugs. Hierbei ist ein Exzenter, dessen Exzenterfläche mit dem Förderkolben des Pumpenelementes zusammenwirkt, über einen Freilauf (eine Einwegkupplung) auf einem Wellenkörper gelagert und der Antrieb des Exenters erfolgt über das freie Ende eines der Schaltkolben eines Progressiv-Verteilers, welcher in einer das Werkezeug überbrückenden Bypassleitung der Hydraulik-Druckleitung für die Betätigung des Werkzeugs liegt. Diese selbsttätige Schmiereinrichtung ist auf den Einsatz eines Progressiv-Verteilers angewiesen, welcher von dem hydraulischen Druckmedium betätigt wird, welches auch das Schlagwerkzeug antreibt.

Aufgabe der vorliegenden Erfindung ist es, eine selbsttätige Schmiereinrichtung der eingangs genannten Art vorzuschlagen, welche in ihrem Aufbau noch einfacher, zuverlässiger und variabler einsetzbar ist.

Diese Aufgabe wird erfindungsgemäß bei einer selbsttätigen Schmiereinrichtung der eingangs genannten Art bspw. dadurch gelöst, dass der Förderkolben des Pumpenelements mit einem mit dem Schlagwerk bewegten, vorzugsweise mit diesem verbundenen Betätigungsarm zusammenwirkt. Auf diese Weise wird die Vibrationsbewegung des Schlagwerkzeugs unmittelbar über den Bewegungsarm auf den Förderkolben des Pumpenelements übertragen, ohne dass es eines größeren mechanischen Aufwandes oder hydraulischer Versorgungsanschlüsse bedarf.

Dabei kann der Betätigungsarm durch eine Aussparung der Gehäusewand des Schlagwerkzeugs hindurchragen, an welcher die Schmiereinrichtung angebracht ist.

Auch bei der erfindungsgemäßen Schmiereinrichtung kann ein Exzenter, dessen Exzenterfläche mit dem Förderkolben des Pumpenelements zusammenwirkt, gemeinsam mit einem Freilauf (einer Einwegkupplung) auf einem Wellenkörper gelagert sein und der Antrieb des Freilaufs mit dem Wellenkörper und des Exzenters von dem mit dem Schlagwerk mitbewegten insbesondere verbundenen Betätigungsarm erfolgen.

Bei einer Weiterbildung dieses Erfindungsgedankens ist dann vorgesehen, dass die Auslenkung des Freilaufs und damit des Exzenters aus einer Ruhelage mittels des Betätigungsarms gegen die Wirkung einer Rückstellkraft, insbesondere die einer Rückstellfeder, erfolgt.

Vorzugsweise ist dabei die Rückstellkraft, z.B. über eine auf die Rückstellfeder wirkende Stellschraube, einstellbar.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: ein Schlagwerkzeug mit einer erfindungsgemäßen selbsttätigen Schmiereinrichtung,
- Fig. 2: eine vergrößerte Darstellung gemäß Ausschnitt II von Fig. 1, und
- Fig. 3: eine noch weiter vergrößerte Darstellung gemäß Ausschnitt III von Fig. 2.

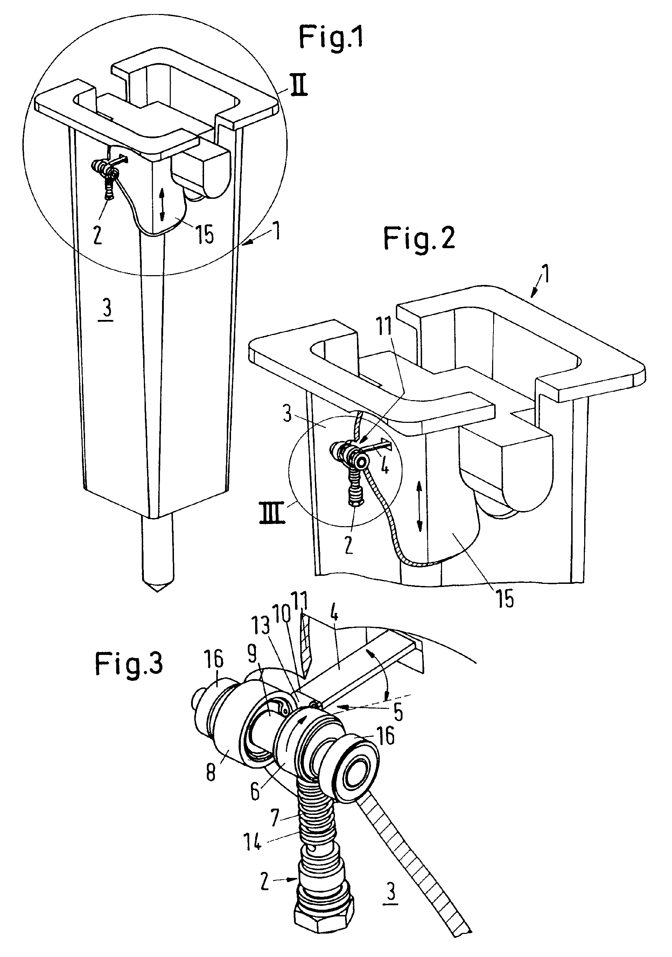

Die selbsttätige Schmiereinrichtung gemäß Fig. 1 dient z.B. der Versorgung eines Schlagwerkzeugs 1, wie eines Schlaghammers, mit Schmierfett an den dafür vorgesehenen Schmierstellen. Zu diesem Zweck weist die Schmiereinrichtung ein mit Schmierstoff z. B. über eine Kartusche zu versorgendes Pumpenelement 2 einer Schmierstoffpumpe zur Förderung eines Schmierstoffes, z.B. Schmierfettes, zu mindestens einer mit Schmierstoff zu beaufschlagenden Stelle des Schlagwerkzeugs 1 auf. Dabei kann der Schmierstoff entweder aufgrund seines eigenen Fließverhaltens und/oder mittels aufgebrachtem Druck dem Förderraum des Pumpenelements 2 zuführbar sein. Zum Erzeugen eines Pumpenhubes des Pumpenelements 2 beim Betreiben des Schlagwerkzeugs 1 wirkt ein Förderkolben 7 des Pumpenelements 2 mit einem mit dem Schlagwerk 15 des Schlagwerkzeugs 1 bewegten Betätigungsarm 4 zusammen. Wie dargestellt, ragt dabei der Betätigungsarm 4 durch eine Aussparung 11 der Gehäusewand 3 des Schlagwerkzeugs 1 hindurch. Aufgrund der durch Doppelpfeile angedeuteten vertikalen Vibration des Schlagwerks 15 des Schlagwerkzeugs 1 macht der Betätigungsarm 4, wie ebenfalls mit Doppelpfeil dargestellt, eine entsprechende Schwingbewegung mit und wirkt hierbei z.B. auf einen Flanschansatz 13 eines als Einwegkupplung arbeitenden Freilaufs 8 zusammen, welcher auf einem mit Lagern 16 ausgestatteten Wellenkörper 9 aufgenommen ist. Mit dem Freilauf 8 ist ein eine Exzenterfläche 6 aufweisender Exzenter 5 verstellbar, wobei der Förderkolben 7 des Pumpenelements 2 mittels einer Rückstellfeder 14 an die Exzenterfläche 6 angedrückt wird. Die Verstellung des Freilaufs 18 durch den Betätigungsarm 4 und damit des Exzenters 5 erfolgt bspw. gegen die Wirkung einer (nicht dargestellten) Rückstellfeder, dessen Rückstellkraft z.B. mittels einer (ebenfalls nicht dargestellten) Stellschraube einstellbar ist, um dadurch die Schmierstoffabgabemenge zu regulieren.

Demgemäss wird, da die Bewegung des Betätigungsarms 4 unmittelbar von der Vibrationsbewegung des Schlagwerks 15 des Schlagwerkzeugs 1 abhängt, dem Schlagwerkzeug 1 nur Schmierstoff während des Arbeitens des Schlagwerkzeugs 1 und zwar genau entsprechend der Vibrationsbewegung zugeführt. Mit jeder Vibrationsbewegung wird der Freilauf 8 gegen die Wirkung der Rückstellfeder derart verdreht, dass die Exzenterfläche 6 den erforderlichen Hub des Förderkolbens 7 bewirkt.

### Bezugszeichenliste:

- 1: Schlagwerkzeug, z.B. Hammer
- 2: Pumpenelement
- 3: Gehäusewand
- 4: Betätigungsarm
- 5: Exzenter
- 6: Exzenterfläche
- 7: Förderkolben
- 8: Freilauf (Einwegkupplung)
- 9: Wellenkörper
- 10: Ende des Betätigungsamrs
- 11: Aussparung
- 12: Lager
- 13: Flanschansatz
- 14: Rückstellfeder
- 15: Schlagwerk

## Patentansprüche

1. Selbsttätige Schmiereinrichtung an einem z.B. mittels eines hydraulischen Druckmediums antreibbaren Schlagwerkzeug (1) oder dergleichen, mit einer ein Pumpenelement (2) aufweisenden Schmierstoffpumpe zur Förderung eines Schmierstoffes, z.B. Schmierfettes, zu mindestens einer mit Schmierstoff zu beaufschlagenden Stelle des Schlagwerkzeugs (1), wobei der Schmierstoff entweder aufgrund seines eigenen Fließverhaltens und/oder mittels aufgebrachtem Druck dem Förderraum des Pumpenelements (2) und von dem Pumpenelement (2) zu der Schmierstelle zuführbar ist, sowie mit Mitteln zum Erzeugen eines Pumpenhubes des Pumpenelements (2) beim Betreiben des Schlagwerkzeugs (1), **dadurch gekennzeichnet, dass** der Förderkolben (7) des Pumpenelements (2) mit einem mit dem Schlagwerk (15) bewegten, vorzugsweise mit diesem verbundenen Betätigungsarm (4) zusammenwirkt.

2. Schmiereinrichtung nach Anspruch 1, **dadurch gekennzeichnet, dass** der Betätigungsarm (4) durch eine Aussparung (11) der Gehäusewand (3) des Schlagwerkzeuges (1) hindurchragt.

3. Schmiereinrichtung nach Anspruch 1 oder 2, **dadurch gekennzeichnet, dass** ein Exzenter (5), dessen Exzenterfläche (6) mit dem Förderkolben (7) des Pumpenelements (2) zusammenwirkt, gemeinsam mit einem Freilauf (einer Einwegkupplung) (8) auf einem Wellenkörper (9) gelagert ist und dass der Antrieb des Wellenkörpers (9) und damit des Exzenters (5) von dem mit dem Schlagwerk (15) mitbewegten, insbesondere mit diesem verbundenen, auf den Freilauf (8) einwirkenden Betätigungsarm (4) erfolgt.

4. Schmiereinrichtung nach Anspruch 2 oder 3, **dadurch gekennzeichnet, dass** die Auslenkung des Freilaufs (8) und damit des Exzenters (5) aus einer Ruhelage mittels des Betätigungsarms (4) gegen die Wirkung einer Rückstellkraft, insbesondere die einer Rückstellfeder, erfolgt.

5. Schmiereinrichtung nach Anspruch 4, **dadurch gekennzeichnet, dass** die Rückstellkraft, z.B. über eine auf die Rückstellfeder wirkende Stellschraube, einstellbar ist.
